# EUROPEAN PATENT SPECIFICATION

(11) **EP 2 877 764 B1**
(45) Date of publication and mention of the grant of the patent: **12.09.2018**
(21) Application number: 13773393.7
(22) Date of filing: 26.07.2013
(51) Int. Cl.: F16K 17/38, A62C 35/68

(54) **SAFETY DEVICE, IN PARTICULAR FOR SELF-PROPULSION GAS SYSTEMS**
SICHERHEITSVORRICHTUNG, INSBESONDERE FÜR EIGENANTRIEBSGASSYSTEME
DISPOSITIF DE SÉCURITÉ, EN PARTICULIER DESTINÉ À DES SYSTÈMES À GAZ À AUTOPROPULSION

(30) Priority: 27.07.2012 IT BS20120122
(43) Date of publication of application: 03.06.2015
(73) Proprietor: Emer S.p.a., 25135 Brescia (IT)
(72) Inventor: PELI, Paolo, I-25128 Brescia (IT); DE RUGGIERI, Giorgio, I-10134 Torino (IT); DEFILIPPI, Roberto, I-10155 Torino (IT)
(74) Representative: Chimini, Francesco
(86) International application number: PCT/IB2013/056138
(87) International publication number: WO 2014/016809

(56) References cited:
- EP-A1- 0 590 235
- FR-A1- 2 626 649
- US-A- 4 553 589
- US-A- 5 109 881
- US-A1- 2003 217 770

## Description

### Field of the invention

The present invention relates to a thermal safety device, i.e. sensitive to the temperature. In general, such a device can be used in self-propulsion gas systems using compressed natural gas, liquefied petroleum gas or other gaseous fuel contained under pressure in a tank or container, and relates in particular to an innovative safety device for such systems.

### Prior art

On vehicles with an engine that can be gas-fuelled, the gaseous fuel is loaded and compressed in at least one cylinder or container. According to certain safety standards in the sector considered herein, each gas cylinder in a vehicle must be equipped with safety means to prevent the explosion due to an abnormal increase in the internal pressure and/or the presence of fire and in any case of a temperature increase beyond a predetermined threshold. To this end, security units have already have been proposed and are used in association with the compressed gas cylinders against excessive temperature increases that lead to increases in the internal pressure of the cylinder.

Known heat safety devices are placed along a gas venting duct from the cylinder to normally close the duct itself and they comprise a heat sensitive element confined in a respective seat or chamber in a solid body in association with an ejection piston. The heat sensitive element keeps the duct closed and changes state only upon reaching a predetermined safety temperature threshold thus opening the vent for emptying the cylinder. In certain embodiments, the heat sensitive element is an alloy at the solid state, melts at the predetermined safety temperature and is pushed at least partially outside through an ejection port by the piston associated thereto so as to open the venting duct. In other embodiments, the heat sensitive element may be in liquid or paste form and contained in a casing intended to break upon reaching the predetermined temperature. It is clear that the sensitivity and reliability of said safety devices must be the highest possible for a proper timely intervention when impinged by an abnormal rise in temperature.

There are known solutions developed in order to increase the reliability and sensitivity of said devices. Said solutions include devices in which the amount of eutectic material is present in extremely small quantities and placed in the proximity of the external environment; sensitivity and reliability increase, in fact, upon the reduction of the amount of eutectic material and the increase of the proximity between said eutectic material and the heat source, i.e. the environment outside the device. Said solutions exhibit the drawback of being affected by a difficult manufacture and assembly process which, if not perfectly executed, can adversely affect the operation of the device itself.

In other solutions already mentioned, a high sensitivity is obtained by using the heat sensitive element in liquid form and contained in a glass casing intended to break at a predetermined temperature; in such devices, in fact, the activation occurs when the temperature is reached and the gas is released immediately. These latter devices are described in patents DE 19911530 C2, EP 0590235 A1, EP 0314577. The problems encountered in the use of such devices are basically of two types: on the one hand, the easy breaking of the glass casing, which is normally made in the shape of a bulb with an elongated neck and thin, for reasons not dependent on the temperature, such as for example the vibrations to which the device is subjected during the operation of the vehicle; and secondly the little resistance in applications where the force that the high pressure gas imparts to the piston is high.

As regards said first problem, if the neck of the glass casing should break before reaching the predetermined temperature, upon reaching said temperature the device would not activate, thus causing high safety hazards. FR2626649A1 discloses a thermal trigger with a Spinkler bulb combining two triggering means enhancing safety with respect to the risks on the one hand of the bulb not being sealed, and on the other hand, of it breaking. However, the device disclosed in FR2626649A1 still suffers of some drawbacks.

Therefore, the need to reduce the time required for activation of the device in order to increase the sensitivity thereof and maintain high reliability of the safety device, while having a device fast and easy to manufacture and cost-effective, is highly felt.

### Object of the invention

The object of the present invention is to provide a heat safety device for the abovementioned use, able to obviate the above drawbacks in relation to the devices according to the prior art.

Another object of the invention is to provide a heat safety device for gas cylinders and the like with greater sensitivity and reliability than known devices, easy to manufacture and cost-effective.

These objects are achieved with a temperature activated relief device for a fluid tank according to claim 1. Preferred embodiments of the invention are the object of the dependent claims, the contents thereof are to be understood as an integral part of the present description.

Preferably, such a device can be used in a tank of pressurized gas, and particularly for gas cylinders for self-propulsion. Further embodiments may, however, provide that such a device can be used in any circumstance where a temperature increase above a certain temperature threshold must trigger a safety function. Exemplary and non limiting applications include fire protection systems, smoke dischargers, fire dampers, and any other heat apparatus, thermally actuated, operable in the event of fire.

The device according to the invention comprises a device body which comprises an inlet duct in communication with a fluid storage and at least one exit hole in communication with the atmosphere. A shut-off device is mounted in the device body and is movable between a closed position, in which it prevents the flow of fluid (preferably gas) from the inlet duct to the exit hole, and an open position, in which it permits the flow of fluid from the inlet duct to the exit hole.

Said shut-off device is locked by a retaining element which, upon reaching a first predetermined temperature, allows the displacement of the shut-off device in said open position.

Said retaining element is protected from accidental shocks and vibrations and kept in its seat by a yielding support element. Said support element is made of a material such as to ensure said protection, keep said retention element in the specific location and be drawn from said retaining element if the temperature reaches a predetermined threshold higher than the first predetermined temperature of activation of the retaining element.

In other words, the yielding support element is suitable for supporting the casing and protecting at least a portion until the temperature reached by the support element is lower than a second predetermined temperature higher than the first.

In an advantageous embodiment, the body is composed by the coupling of a main portion and a ring nut, known elements easy to make, which define an internal chamber in which the retaining element and the support element are housed and kept in position. The assembly is thus compact and stable.

In a preferred embodiment, the device body and the inner chamber extend mainly along a longitudinal axis, and the shut-off device is a piston movable axially along said longitudinal axis between a forward closed position and a retracted open position of the venting duct.

In one embodiment, said retaining element consists of a glass casing shaped as a bulb containing a heat sensitive fluid that at the first predetermined temperature leads to the breakage of said casing. Said casing is sized in such a way as to allow, once broken, the axial displacement of the piston in the retracted open position.

Said bulb shape includes a hemispherical portion and a neck on the opposite side that needs to be protected from said yielding support element, advantageously in the shape of a bush. Said bush also helps to keep the bulb in place under conditions of normal use.

The bush, the glass bulb and the ring nut are also sized to allow, in case of non-activation of the bulb, that the axial displacement of the glass bulb due to the yield of the mechanical characteristics of the bush allow an axial displacement of the piston by such an extent as to bring it to the retracted open position.

In an advantageous embodiment, the piston gate includes a head portion that sealingly engages the inlet duct, a tail portion which partly engages in the inner chamber and which comprises a seat for the hemispherical surface of the glass bulb. At least one outlet hole is formed in the device body or in the ring nut in such a way as to allow, when the gate is in retracted open position, the gas to be instantaneously drained from said inlet duct to the outlet holes.

Thanks to such an embodiment, the sensitivity of the device is very high since an element of eutectic material that requires time for complete melting is not used. Moreover, the problem of reliability is also solved since in the case where the heat sensitive element does not activate, for example due to an accidental breaking of the casing neck, at a predetermined temperature the yielding support element loses its mechanical characteristics, preferably instantly, allowing the bulb and consequently the piston to move to said open position.

Upon reaching the predetermined breaking temperature of the bulb, the device would not activate if the bulb neck has broken for accidental reasons before reaching said temperature. Therefore, a higher temperature is set at which the bush of plastic material instantly yields, allowing the consequent gas escape. The activation is certain, and in both cases is done in a very short time.

### Brief description of the drawings

The features and the advantages of the invention will appear clearly from the following detailed description, made by way of a non-limiting example with reference to the accompanying drawings, in which:

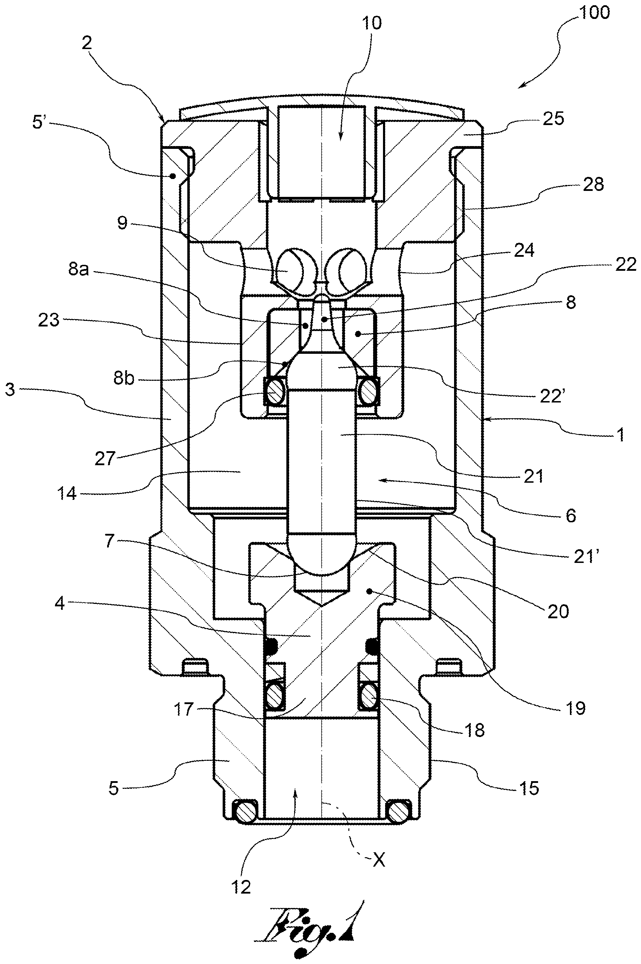

Figure 1 shows an axial section of the relief device according to the invention; and

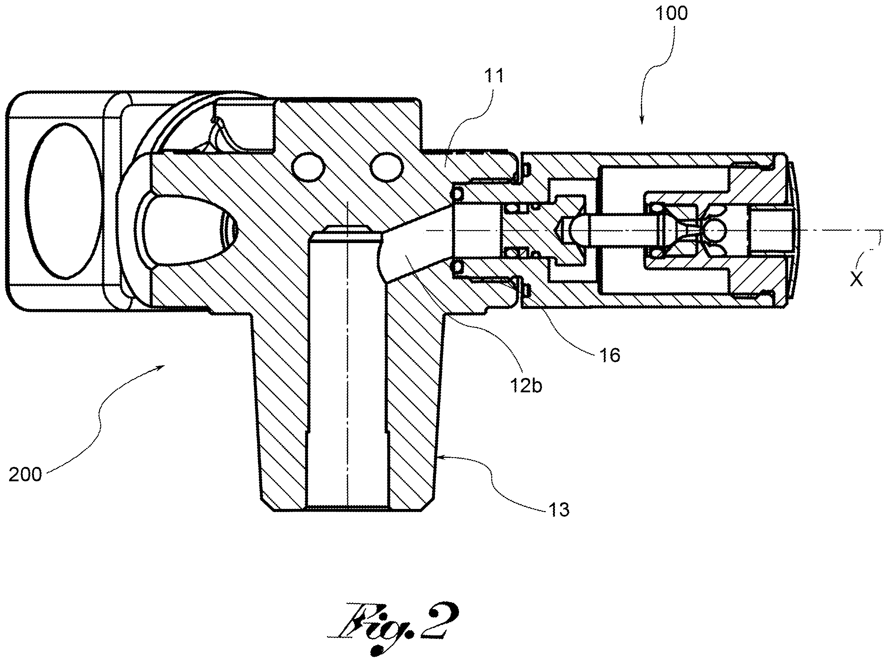

Figure 2 shows an axial section of the device applied to a valve.

### Detailed description of the invention

In said drawings, reference numeral 100 indicates as a whole a temperature activated relief device for a pressurised gas cylinder for self-propulsion systems. The relief device 100 comprises a device body 1, comprising a main portion 3, which extends along a longitudinal axis X of the device between a first end 5 and a second end 5', both open and opposite to one another. A ring nut 2 is positioned to close the second end 5'. The device body 1 and the ring nut 2 together delimit an inner chamber 14. Said inner chamber 14 is in fluid communication with said gas cylinder through an inlet duct 12, formed in the first end 5 of the device body 1. Furthermore, said inner chamber 14 is in fluid communication with the atmosphere through at least one outlet hole 9, 10. Therefore, the inlet duct 12, the inner chamber 14 and the at least one outlet hole 9, 10 form, when they are placed in fluid connection with one another, a venting duct to the atmosphere for the gas contained in the cylinder.

In one embodiment, the first end 5 of the device body 1 is suitable to be removably connected to a valve body 11. For example, said first end 5 of the device body has a threaded connecting portion 15 which is screwed into a threaded seat 16 formed in the valve body 11 and in which the inlet duct 12 flows.

Preferably, the inner chamber 14 and the inlet duct 12 are coaxial to said longitudinal axis X.

A shut-off device, for example a piston gate 4, is partially housed in the inner chamber 14. Said piston gate 4 is movable between a forward closed position, in which it prevents the passage of gas from the inlet duct 12 to the outlet hole 9, and a retracted open position, in which it allows such a gas passage. In one embodiment, the piston gate 4 has a head portion 17 which, when the gate is in the forward position, sealingly engages the inlet duct 12. For example, said head portion 17 is provided with at least one annular seal 18. The head portion 17 of gate 4 is therefore sized to accommodate in, and sealingly engage, thanks to its seal 18, the inlet duct 12.

The piston gate 4 also comprises a tail portion 19, which partially engages the inner chamber 14.

A retaining element operatively associated with said shut-off device is housed into chamber 14, preferably arranged coaxially to the longitudinal axis X, to keep the shut-off device in the closed position. Said retaining element is a heat sensitive element 6 which includes a casing 21 containing a heat sensitive substance suitable to expand upon reaching a first predetermined temperature to lead to the breakage of said casing and allow the displacement of the valve to the open position. Said casing 21, preferably made of a glass material, has a bulb shape with a substantially cylindrical casing body 21, a first end 7 having a hemispherical shape that goes in abutment with a respective seat 20 formed in the tail portion 19 of the piston gate 4, and a second end 22, axially elongated, defining the bulb neck. Said neck 22 has a mean diameter less than that of said casing body and a base 22' of connection to said body.

In the example shown, the ring nut 2 comprises a distal portion 23, which extends inside the inner chamber 14, an intermediate portion 24 and a head 25 which cooperates with the first opening of the device body. Said distal portion 23 has a substantially hollow cylindrical shape suitable for housing a yielding support element 8 therein suitable for supporting the casing of the heat sensitive substance, as will be described in more detail below.

An outlet duct 10, for example with axial extension, is obtained in head 25 of the ring nut 2 which communicates with the inner chamber 14 through at least one outlet hole 9 formed in the intermediate portion 24 of the ring nut, for example in radial direction. Said head 25 for example has an externally threaded portion 28 for a threaded coupling with the device body 1.

The yielding support element 8 is shaped as a bush defining a bush cavity 8a adapted to accommodate neck 22 of casing 21. On the side facing casing 21, the yielding support element 8 has a rim 8b which engages at least in the axial direction said casing 21, so as to lock it in the position in which it is located during the normal operation of the device, i.e. coaxially with respect to the longitudinal axis X. In a preferred embodiment, said rim 8b of the bush rests against base 22' of the neck of the casing so as to lock also the latter in the radial direction. For example, said rim has an inner conical or concave surface that abuts against the surface of the neck base. It should be noted that, while base 22' of the neck of casing 22 is engaged by rim 8b of bush 8, neck 22 of casing 21 extends freely within the bush itself.

The yielding support element 8 is suitable to yield upon reaching a second predetermined temperature, higher than the first one, in order to allow the displacement of the valve to the open position. In a preferred embodiment, said yielding support element 8 is made of a plastic material the mechanical resistance of which is maintained at a temperature range below the second predefined temperature and decreases upon reaching said second predefined temperature. According to an advantageous embodiment, such decrease in the resistance occurs suddenly and drastically. Preferably, the material of the yielding support element is polyoxymethylene (PMO) .

In particular, the mechanical resistance of the plastic material of said yielding support element at said second predefined temperature is lower than the mechanical resistance of the material which the casing is composed of at the same temperature. Therefore, upon reaching said second predefined temperature, the yielding support element 8 allows itself to be pierced by the casing under the thrust exerted by the gas on the shut-off device 4 and thereby on the first end 7 of casing 21.

In the inner surface of the distal portion 23 of the ring nut 2 there is further obtained an annular seat in which an annular support element is housed, made of a soft and/or elastic material, for example, a seal 27, which surrounds the lateral surface of body 21' of the casing helping to dampen vibrations and/or shocks and/or to keep neck 22 of the bulb in position.

Therefore, a function of bush 8 and seal 27 is to protect neck 22 of the glass bulb 6 by damping the vibrations to which the device is normally subject or due to any accidental impacts.

The device as described therefore prevents a translation of the shut-off device 4 from the forward closed position to the retracted open position, thanks to the contrast action carried out by the heat sensitive element 6, in turn kept in said contrast position by the yielding support element 8.

When, for any reason, the temperature within the relief device increases up to more than a first predetermined threshold (e.g. 110 °C), the heat sensitive fluid within casing 21 expands up to cause the breaking of the casing itself. Lacking the reaction of casing 21, the shut-off device 4 is free to retract under the thrust due to the gas pressure inside the cylinder. The inlet duct 12 is then placed in fluid communication with the inner chamber 14 for the discharge of gas through the outlet holes 9. It should be noted that the portion of the inner chamber 14 anteriorly delimited by the tail portion 19 of the piston gate is always placed in fluid communication with the exterior through said venting holes 9, so as to ensure that said portion of the inner chamber is always at atmospheric pressure and thus does not oppose the thrust generated in the opposite direction by the gas.

If, for any cause, the second end 22 of the heat sensitive element 6 should break during the normal operation of the device, if the temperature within the relief device reaches, after said breakage, a first predetermined threshold, casing 21 would remain intact as the heat sensitive substance may flow freely from the casing through the broken end. The shut-off device 4 would thus remain locked in the forward closed position of the inlet duct 12, preventing gas from leaking out of the device, with consequent high safety hazards. To avoid this potential problem, the yielding support element 8 allows an axial displacement of the heat sensitive element 6 upon reaching a second predetermined threshold temperature (e.g. 130 °C). As mentioned above, in a preferred embodiment said yielding support element is made of a plastic material such that, at said second predetermined threshold, the resistance characteristics of said material degrade in a sudden manner and up to a level such that the glass casing 21, under the thrust due to the gas pressure inside the cylinder, leaks from said plastic material moving in the axial direction and freeing in turn the shut-off device 4, which retracts opening the inlet duct 12.

In brief, the yielding support element 8 is made in such a way as to:
- ensure the damping of vibrations and shocks, protecting the neck of casing 21 from a possible undesired breakage;
- keep casing 21 in its normal operating position of the device, even in the case of high force values exerted on the shut-off device 4;
- yield, preferably suddenly from the mechanical strength point of view, upon reaching a predetermined temperature value, higher than the activation temperature of the heat sensitive element, so as to be overcome by the axial thrust exerted thereon by the casing.

## Claims

1. Temperature activated relief device (100) comprising:
- a device body (1) which comprises an inlet duct (12) in communication with a fluid storage and at least one outlet hole (9, 10) in communication with the atmosphere;
- a shut-off device (4) mounted in said device body (1) and movable between a closed position, in which it prevents the flow of gas from the inlet duct (12) to the outlet hole (9, 10), and an open position, in which it permits the flow of fluid from the inlet duct (12) to the outlet hole (9, 10);
- a retaining element operatively associated to said shut-off device (4) to keep said shut-off device in the closed position, said retaining element comprising a casing (21) containing a heat sensitive substance suitable for expanding upon reaching a first predefined temperature to make such casing (21) break and permit the shifting of the shut-off device (4) to the open position;
- a yielding support element (8) suitable for supporting said casing (21) and protecting at least a portion of said casing while the temperature reached by said support element (8) is below a second predefined temperature higher than the first, said support element (8) being made of a material suitable to yield upon reaching said second predefined temperature, so as to allow the movement of the shut-off device (4) to the open position wherein the casing (21) extends mainly along a casing axis between a first end, which engages said shut-off device (4), and second end, opposite the first, engaged by said yielding support element (8),
wherein the casing (21) has a bulb shape, with a substantially cylindrical casing body and a neck (22) which forms the second end, said neck (22) having a smaller average diameter than that of the casing body and having a base (22') connecting to said casing body, and wherein the yielding support element (8) is in the shape of a bush with an inner cavity (8a) housing said neck (22) and a rim (8b),
the device being **characterised in that** said rim (8b) engages the base (22') of the neck (22) so as to lock the casing (21) both in axial and radial direction, while the neck (22) extends freely within the bush itself.

2. Device according to claim 1, wherein the material of said yielding support element (8) is a plastic material the mechanical resistance of which is maintained at a temperature range below said second predefined temperature and decreases upon reaching said second predefined temperature.

3. Device according to claim 2, wherein the mechanical resistance of the plastic material of said yielding support element (8) at said second predefined temperature is lower than the mechanical resistance of the material which the casing (21) is composed of at the same temperature.

4. Device according to claim 3, wherein, upon reaching said second predefined temperature, said yielding support element (8) allows itself to be pierced by the casing (21) under the thrust exerted by the gas on the shut-off device (4) and thereby on the first end of the casing (21) .

5. Device according to any of the previous claims, wherein said yielding support element (8) is housed in a respective seat made in the device body (1).

6. Device according to any of the previous claims, wherein the inner chamber (14) extends mainly along a longitudinal device axis (X) and wherein the shut-off device (4) is a piston gate (4) axially movable along said longitudinal axis between the closed position and the open position.

7. Device according to any of the previous claims, wherein the shut-off device (4) and the yielding support element (8) are coaxial to each other along a longitudinal device axis (X), the shut-off device (4) and the retaining element being axially movable in relation to said longitudinal axis (X).

8. Device according to any of the previous claims, wherein said casing (21) is made of a vitreous material.

9. Device according to any of the previous claims, wherein said plastic material of said yielding support element (8) is polyoxymethylene.

10. Device according to any of the previous claims, wherein said device is configured to be used for relieving pressure in a pressurized gas tank.

## Patentansprüche

1. Temperaturaktivierte Entlastungsvorrichtung (100), die umfasst:
- einen Vorrichtungskörper (1), der einen Einlasskanal (12) in Verbindung mit einem Fluidspeicher und wenigstens ein Auslassloch (9, 10) in Verbindung mit der Atmosphäre umfasst;
- eine Abschaltvorrichtung (4), die in dem Vorrichtungskörper (1) montiert ist und zwischen einer geschlossenen Position, in der sie die Strömung von Gas von dem Einlasskanal (12) zu dem Auslassloch (9, 10) verhindert, und einer offenen Position, in der sie die Strömung von Fluid von dem Einlasskanal (12) zu dem Auslassloch (9, 10) zulässt, beweglich ist;
- ein Festhalteelement, das betriebsfähig mit der Abschaltvorrichtung (4) verbunden ist, um die Abschaltvorrichtung in der geschlossenen Position zu halten, wobei das Festhalteelement ein Gehäuse (21) umfasst, das eine wärmeempfindliche Substanz enthält, die geeignet ist, um sich bei Erreichen einer ersten vordefinierten Temperatur auszudehnen, um ein derartiges Gehäuse (21) brechen zu lassen und das Verschieben der Abschaltvorrichtung (4) in die offene Position zu erlauben;
- ein nachgebendes Haltelement (8), das geeignet ist, um das Gehäuse (21) zu halten und wenigstens einen Abschnitt des Gehäuses zu schützen, während die von dem Haltelement (8) erreichte Temperatur unter einer zweiten vordefinierten Temperatur ist, die höher als die Erste ist, wobei das Haltelement (8) aus einem Material hergestellt ist, das geeignet ist, bei Erreichen der zweiten vordefinierten Temperatur nachzugeben, um die Bewegung der Abschaltvorrichtung in die offene Position zuzulassen, wobei das Gehäuse (21) sich hauptsächlich entlang einer Gehäuseachse zwischen einem ersten Ende, das an der Abschaltvorrichtung (4) angreift, und einem zweiten Ende entgegengesetzt zu dem Ersten, an dem von dem nachgebenden Haltelement (8) angegriffen wird, erstreckt,
wobei das Gehäuse (21) eine Knollenform mit einem im Wesentlichen zylindrischen Gehäusekörper und einem Hals (22), der das zweite Ende bildet, hat, wobei der Hals (22) einen kleineren mittleren Durchmesser als den des Gehäusekörpers hat und eine Basis (22') hat, die mit dem Gehäusekörper verbindet, und wobei das nachgebende Haltelement (8) die Form einer Hülse mit einem Innenhohlraum (8a) hat, der den Hals (22) und einen Rand (8b) aufnimmt,
wobei die Vorrichtung **dadurch gekennzeichnet ist, dass** der Rand (8b) an der Basis (22') des Halses (22) angreift, um das Gehäuse (21) sowohl in der Axial- als auch Radialrichtung zu sperren, während der Hals (22) sich innerhalb der Hülse selbst frei erstreckt.

2. Vorrichtung nach Anspruch 1, wobei das Material des nachgebenden Haltelements (8) ein Kunststoffmaterial ist, dessen mechanische Widerstandsfähigkeit in einem Temperaturbereich unter der zweiten vordefinierten Temperatur aufrecht erhalten wird und bei Erreichen der zweiten vordefinierten Temperatur abnimmt.

3. Vorrichtung nach Anspruch 2, wobei die mechanische Widerstandsfähigkeit des Kunststoffmaterials des nachgebenden Haltelements (8) bei der zweiten vordefinierten Temperatur niedriger als die mechanische Widerstandsfähigkeit des Materials, aus dem das Gehäuse (21) zusammengesetzt ist, bei der gleichen Temperatur ist.

4. Vorrichtung nach Anspruch 3, wobei das nachgebende Haltelement (8) bei Erreichen der zweiten vordefinierten Temperatur zulässt, dass es unter dem Schub, der durch das Gas auf die Abschaltvorrichtung (4) und dadurch auf das erste Ende des Gehäuses (21) ausgeübt wird, selbst durch das Gehäuse (21) durchbohrt wird.

5. Vorrichtung nach einem der vorhergehenden Ansprüche, wobei das nachgebende Haltelement (8) in einem jeweiligen Auflager aufgenommen ist, das in dem Vorrichtungskörper (1) hergestellt ist.

6. Vorrichtung nach einem der vorhergehenden Ansprüche, wobei die Innenkammer (14) sich hauptsächlich entlang einer Vorrichtungslängsachse (X) erstreckt, und wobei die Abschaltvorrichtung (4) ein Kolbenverschluss (4) ist, der zwischen der geschlossenen Position und der offenen Position axial entlang der Längsachse beweglich ist.

7. Vorrichtung nach einem der vorhergehenden Ansprüche, wobei die Abschaltvorrichtung (4) und das nachgebende Haltelement (8) entlang einer Vorrichtungslängsachse (X) koaxial zueinander sind, wobei die Abschaltvorrichtung (4) und das Festhalteelement in Relation zu der Längsachse (X) axial beweglich sind.

8. Vorrichtung nach einem der vorhergehenden Ansprüche, wobei das Gehäuse (21) aus einem gesinterten bzw. glasartigen Material hergestellt ist.

9. Vorrichtung nach einem der vorhergehenden Ansprüche, wobei das Kunststoffmaterial des nachgebenden Haltelements (8) Polyoxymethylen ist.

10. Vorrichtung nach einem der vorhergehenden Ansprüche, wobei die Vorrichtung aufgebaut ist, um dazu verwendet zu werden, den Druck in einem unter Druck stehenden Gasbehälter zu entlasten.

## Revendications

1. Dispositif de décharge activé par la température (100) comprenant :
- un corps de dispositif (1) qui comprend une conduite d'admission (12) en communication avec un stockage de fluide et au moins un trou d'évacuation (9, 10) en communication avec l'atmosphère ;
- un dispositif de fermeture (4) monté dans ledit corps de dispositif (1) et mobile entre une position fermée, dans laquelle il empêche l'écoulement de gaz de la conduite d'admission (12) vers le trou d'évacuation (9, 10), et une position ouverte, dans laquelle il permet l'écoulement de fluide de la conduite d'admission (12) vers le trou d'évacuation (9, 10) ;
- un élément de retenue fonctionnellement associé audit dispositif de fermeture (4) pour maintenir ledit dispositif de fermeture dans la position fermée, ledit élément de retenue comprenant un boîtier (21) contenant une substance sensible à la chaleur adaptée à se dilater lorsqu'elle atteint une première température prédéfinie pour provoquer la rupture d'un tel boîtier (21) et permettre le déplacement du dispositif de fermeture (4) vers la position ouverte ;
- un élément de support flexible (8) adapté à supporter ledit boîtier (21) et protégeant au moins une partie dudit boîtier alors que la température atteinte par ledit élément de support (8) est inférieure à une seconde température prédéfinie supérieure à la première, ledit élément de support (8) étant composé d'un matériau adapté à céder lorsqu'il atteint ladite seconde température prédéfinie, de manière à permettre le mouvement du dispositif de fermeture (4) vers la position ouverte dans laquelle le boîtier (21) s'étend principalement le long d'un axe de boîtier entre une première extrémité, qui entre en prise avec ledit dispositif de fermeture (4), et une seconde extrémité, opposée à la première, mise en prise par ledit élément de support flexible (8),
dans lequel le boîtier (21) présente une forme d'ampoule, avec un corps de boîtier sensiblement cylindrique et un col (22) qui forme la seconde extrémité, ledit col (22) présentant un diamètre moyen inférieur à celui du corps de boîtier et comprenant une base (22') se raccordant audit corps de boîtier, et dans lequel l'élément de support flexible (8) présente la forme d'une bague avec une cavité interne (8a) accueillant ledit col (22) et un bord (8b),
le dispositif étant **caractérisé en ce que** ledit bord (8b) entre en prise avec la base (22') du col (22) de manière à verrouiller le boîtier (21) à la fois dans des directions axiale et radiale, alors que le col (22) s'étend librement à l'intérieur de la bague elle-même.

2. Dispositif selon la revendication 1, dans lequel le matériau dudit élément de support flexible (8) est un matériau de plastique dont la résistance mécanique est maintenue dans une plage de température sous ladite seconde température prédéfinie et diminue lorsqu'il atteint ladite seconde température prédéfinie.

3. Dispositif selon la revendication 2, dans lequel la résistance mécanique du matériau plastique dudit élément de support flexible (8) à ladite seconde température prédéfinie est inférieure à la résistance mécanique du matériau dont le boîtier (21) est composé à la même température.

4. Dispositif selon la revendication 3, dans lequel, lorsqu'il atteint ladite seconde température prédéfinie, ledit élément de support flexible (8) se laisse percer par le boîtier (21) sous la poussée exercée par le gaz sur le dispositif de fermeture (4) et par conséquent sur la première extrémité du boîtier (21).

5. Dispositif selon l'une quelconque des revendications précédentes, dans lequel ledit élément de support flexible (8) est accueilli dans un siège respectif formé dans le corps de dispositif (1).

6. Dispositif selon l'une quelconque des revendications précédentes, dans lequel la chambre interne (14) s'étend principalement le long d'un axe de dispositif longitudinal (X) et dans lequel le dispositif de fermeture (4) est un clapet piston (4) axialement mobile le long dudit axe longitudinal entre la position fermée et la position ouverte.

7. Dispositif selon l'une quelconque des revendications précédentes, dans lequel le dispositif de fermeture (4) et l'élément de support flexible (8) sont coaxiaux l'un par rapport à l'autre le long d'un axe de dispositif longitudinal (X), le dispositif de fermeture (4) et l'élément de retenue étant axialement mobiles par rapport audit axe longitudinal (X).

8. Dispositif selon l'une quelconque des revendications précédentes, dans lequel ledit boîtier (21) est composé d'un matériau vitreux.

9. Dispositif selon l'une quelconque des revendications précédentes, dans lequel ledit matériau plastique dudit élément de support flexible (8) est du polyoxyméthylène.

10. Dispositif selon l'une quelconque des revendications précédentes, dans lequel ledit dispositif est configuré pour être utilisé pour détendre la pression dans un réservoir de gaz sous pression.
